# EUROPEAN PATENT SPECIFICATION

(11) **EP 0 462 511 B1**
(45) Date of publication and mention of the grant of the patent: **07.06.1995**
(21) Application number: 91109705.3
(22) Date of filing: 13.06.1991
(51) Int. Cl.: B62J 17/00

(54) **A fairing for a motorcycle**
Eine Verkleidung für ein Motorrad
Un carénage pour une motocyclette

(30) Priority: 18.06.1990 JP 159078/90; 20.03.1991 JP 81972/91
(43) Date of publication of application: 27.12.1991
(73) Proprietor: HONDA GIKEN KOGYO KABUSHIKI KAISHA, Minato-ku Tokyo 107 (JP)
(72) Inventor: Yoshimura, Heijiro, Fujimi-Shi, Saitama-Ken (JP); Yamazaki, Yukihiro, Asaka-Shi, Saitama-Ken (JP); Takahashi, Yasutsugu, Kawagoe-Shi, Saitama-Ken (JP); Itoh, Nobuya, Kiyose-Shi, Tokyo (JP); Shibayama, Masanobu, Niiza-Shi, Saitama-Ken (JP); Suzuki, Takahisa, Iruma-Gun, Saitama-Ken (JP); Tsukui, Hiroaki, Tanashi-Shi, Tokyo (JP)
(74) Representative: Fincke, Karl Theodor, Dipl.-Phys. Dr.

(56) References cited:
- EP-A- 0 264 301
- FR-A- 2 616 734
- US-A- 4 066 291
- Bike, number 187, Febr. 1987, "Mob-Rule", page p39, lower photo "Voluptuous all-enclosing bodywork..."

## Description

The present invention relates to a fairing for a motorcycle, said fairing continuously covering both sides of an engine mounted on a front portion of a main frame of said motorcycle, an upper forward portion of a front fork of the motorcycle being rotatably mounted in a head pipe connected to the front portion of the main frame and a multiple of air flow through-holes being provided in the fairing.

A fairing of this type is disclosed in EP-A-264 301.

According to this disclosure, the air flow through-holes are provided only in the front surface area of the fairing.

In FR-A- 2 616 734 are disclosed air flow through-holes in a fairing of a motorcycle which are formed by slots. The opening and closing of said air flow through-holes can be controlled. A plate suitable for acting as a water protection plate is disposed within the fairing behind air flow through-holes which are directed forwardly.

In US-A-4 066 291 is disclosed a failing for a motorcycle which has air flow through-holes formed by netted fiber elements.

In Japanese patent application lying open to public inspection 1982-7774 and Japanese utility model application lying open to public inspection 1984-174979 are disclosed fairings for motorcycles which copier the front portion of the motorcycle with continuously curved surfaces from the front thereof to both sides of an engine in order to reduce the air resistance. The one fairing has a mesh-type outlet of an air flow duct in a fairing side surface and the other has an air flow through-hole in a fairing bottom portion.

Object of the invention is to reduce the air resistance during high speed cornering of a motorcycle, particularly of a racing motorcycle and further, to improve the cooling efficiency of the engine by increasing the air flow capacity within the fairing, especially when the motorcycle is being banked for cornering and the fairing receives ram air as side wind to increase the running air resistance.

According to claim 1, when the motorcycle is cornering, the air pressure of the side wind will increase and a part of ram air passes the air flow through-holes provided in said smooth surfaces so that the increase of the air pressure is controlled and further the air flow capacity within the fairing can be improved.

According to claim 2, the air flow increase can be further enhanced.

According to claim 3, the air flow through-holes can be formed simultaneously with a fairing injection molding process.

According to claim 4, the air flow can be directed by the slot form of the air flow through-holes.

According to claim 5, the ram air passes the fairing surface with less turbulence because of the cut edge openings of the air flow through-holes.

According to claim 6, even if the inner duct receives the ram air when the motorcycle is cornering, the ram air pressure does not increase because the wind air passes in the air flow-through holes.

Further, the hot air from the radiator can be exhausted efficiently.

According to claim 7, the increase of the air pressure can be limited even if the two divided upper and lower radiators are employed.

According to claim 8, when the motorcycle is cornering, the increase of the air pressure can be limited by the air flow through-holes provided in the middle surface portion between the meter cover portion and the upper portion of the air conducting opening of the radiator.

According to claim 9, the increase of the air pressure around the air exhaust ducts is controlled by the air flow through-holes.

According to claim 10, it can have a better effect during straight running of the motorcycle with the closed air flow-through holes and further, the air pressure control effect can be obtained by the air flow-through holes during motorcycle cornering.

According to claims 11 and 12, the air flow-through holes can be controlled in response to air pressure.

According to claim 13, as water such as rain passes from the outside to the inside of the fairing through the air flow-through holes and falls downwardly along the water protection plate, it does not reach the motorcycle operator. As there is provided a space between the fairing and the water protection plate, the effect of the present invention can still be obtained because air from the outside can pass in the space smoothly.

### PREFERRED EMBODIMENTS

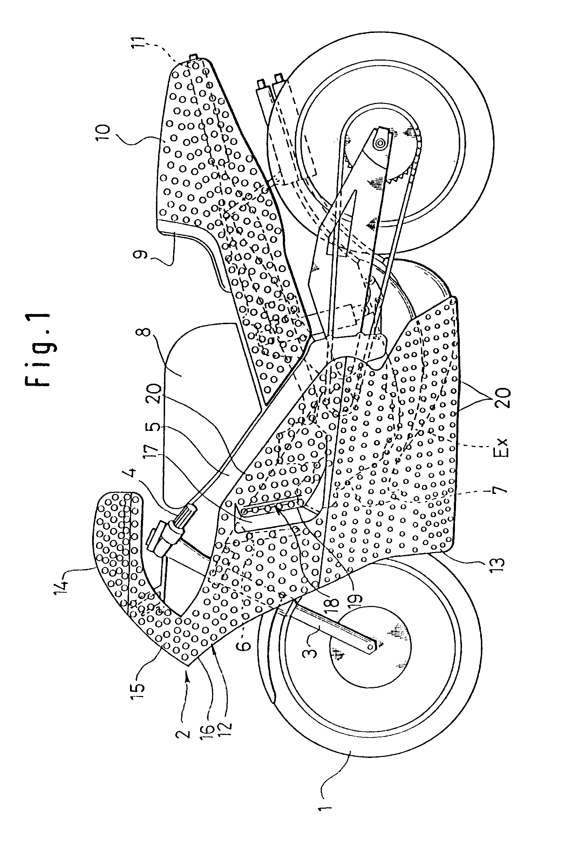

Figs. 1 to 6 show a preferred embodiment.
- Fig. 1: shows an outside view of a motorcycle.
- Fig. 2: shows a distribution of air flow-through holes.
- Fig. 3: shows yarn elements netted to form air flow-through holes.
- Figs. 4 and 5: show various embodiments of air flow-through holes.
- Fig. 6: shows a sectional view along line B-B of Fig. 5.
Figs. 7 to 9 show an air pressure responsive opening control of air flow-through holes.

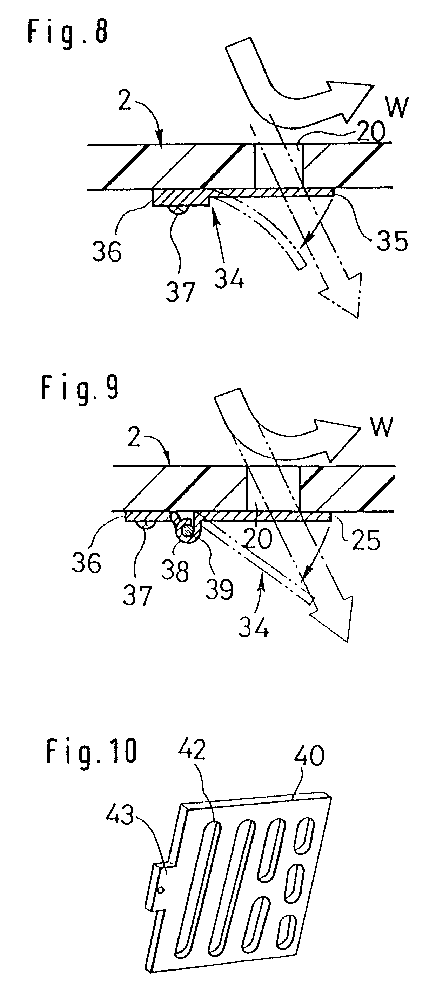

- Fig. 7: shows a main portion thereof.
- Figs. 8 and 9: show enlarged sectional views of the main portion.
Figs. 10 to 13 show another embodiment of opening controlled air flow-through holes actuated by an electrical device.
- Figs. 10 to 12: correspond to Figs. 7 to 9.

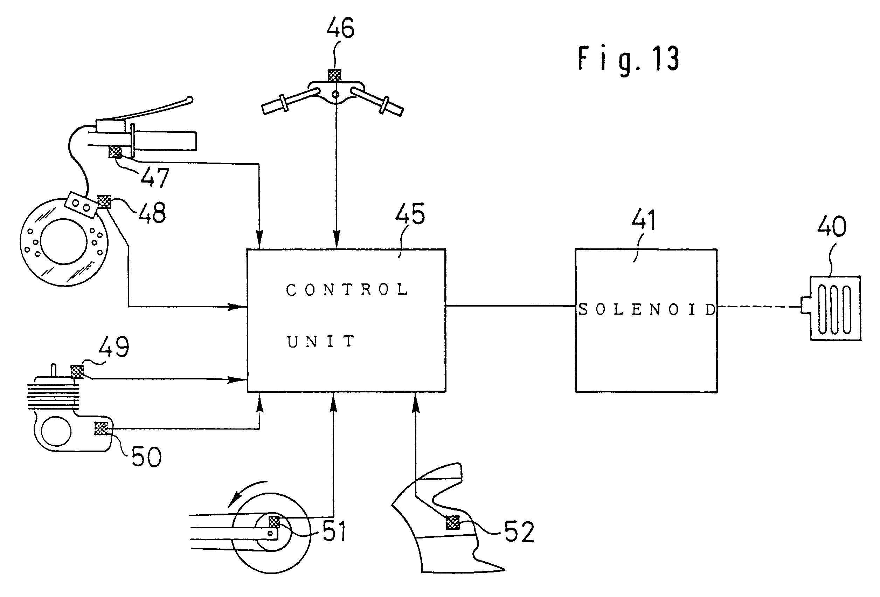

- Fig. 13: shows a control system.

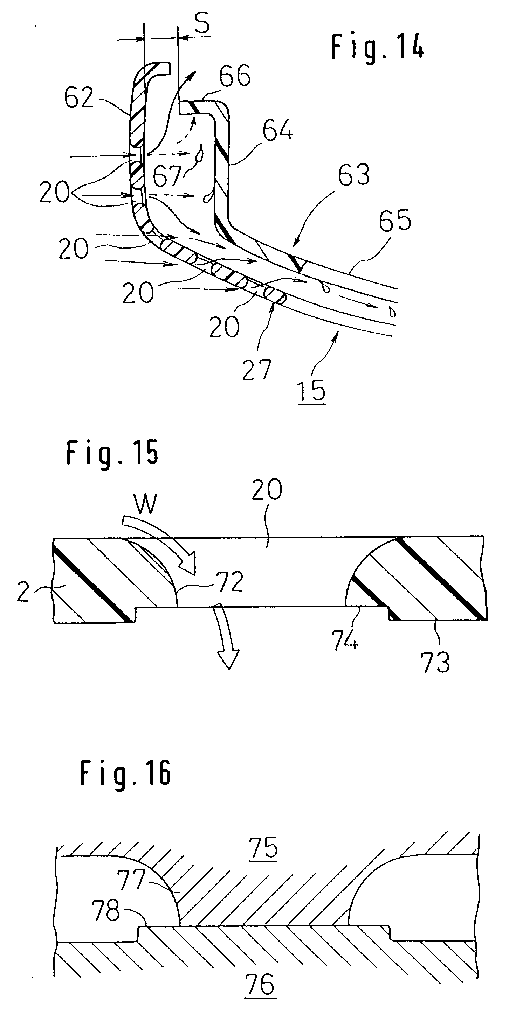

- Fig. 14: shows an enlarged sectional view of a fairing.
- Fig. 15: shows an enlarged sectional view of a main portion of the embodiment of Fig. 14.
- Fig. 16: shows a molding method of the main portion in the embodiment of Fig. 14
In these figures, the reference characters indicate the following parts:
1 = a front wheel,
2 = a fairing,
3 = a front fork,
4 = a handle,
5 = a main frame,
6 = a radiator,
7 = an engine,
Ex = an exhaust pipe
8 = a fuel tank,
9 = a seat,
10 = a rear cowl,
11 = an upper muffler passing within the rear cowl.

The fairing 2 is composed of an upper cowl 12 and a lower cowl 13 and covers an upper portion of the front fork 3, the front portion apart from the handle 4 and both sides of a lower portion of the main frame 5 below the fuel tank 8. The fairing 2 can be made integrally as one unit.

In the fairing are disposed the radiator 6, the exhaust pipe Ex and the engine 7. The upper cowl 12 has a transparent screen portion 14 in an upper portion thereof and a meter cover portion 15 with visor function for the meters in a lower portion of the upper cowl 12. A large cooling air inlet 16 is arranged at a front portion of the fairing 2. Both rear portions of the fairing 2 extend in slanting downward direction along the main frame 5.

An outlet 17 for the air exhausted from the radiator 6 is arranged in both side surfaces of the fairing 2 around the rear portion of the radiator 6 and forms an inner duct 18 extending in the main frame 5. The inner duct 18 is integral with the fairing 2 and has a smooth surface 19 with an inward curve at a front portion thereof. An end portion of the outlet 17 is located adjacent a rear portion of the radiator 6. There are provided multiple air flow-through holes 20 in both the surface of the fairing 2 and the rear cowl 10.

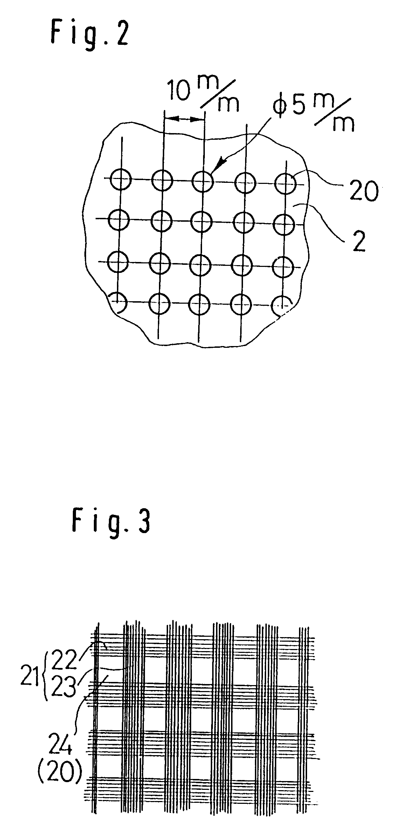

The air flow-through holes 20 are shown in Figure 2 in which the center distance between the holes is 10 mm (ten millimeters) and the diameter thereof is 5 mm (five millimeters). The total area of total air flow-through holes 20 is 17 % (seventeen per cent) of the total surface area of the fairing 2 and the rear cowl 10. The air flow-through holes area percentage of 17 % is the lowest value to obtain a good effect of controlling the air pressure by the side wind; a higher value is desirable for the mechanical design. However, as the air pressure control effect changes depending on the outside shape of the fairing 2, the opening area value should be determined by taking each substantial factor into account.

In order to determine the upper limit of the value, the scope that does not significantly affect the smooth effect of the fairing 2 should be considered. It is possible to use various kinds of forms, manufacturing methods, spread densities and so on for the air flow-through holes 20.

In case the fairing 2 is formed of FRP, netting holes 24 can be made according to Figure 3 by a combination of transverse yarns and vertical yarns of yarn elements 21 (examples: carbon yarn, Kevlar yarn (® DuPont). By an injection molding process, the netting holes 24 can be formed as the air flow-through holes 20 so that the air flow-through holes 20 can be made easily and further, the stiffness of the fairing 2 and the rear cowl 10 can be kept sufficiently high because no cutting of the yarn elements is necessary.

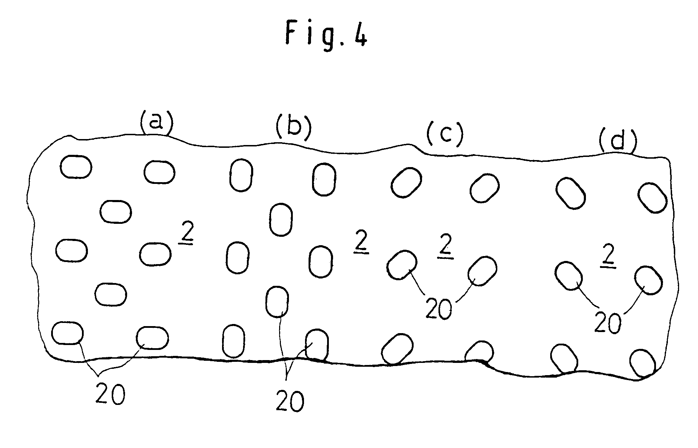

Figure 4 shows various slot forms of the air flow-through holes 20: (a) shows the long axis of the slots to be transverse, (b) shows the long axis of the slots to be vertical, (c) shows the long axis of the slots inclining to the right direction and (d) shows the long axis of the slots inclining to the left direction. Such arrangements can give the air the desired directions.

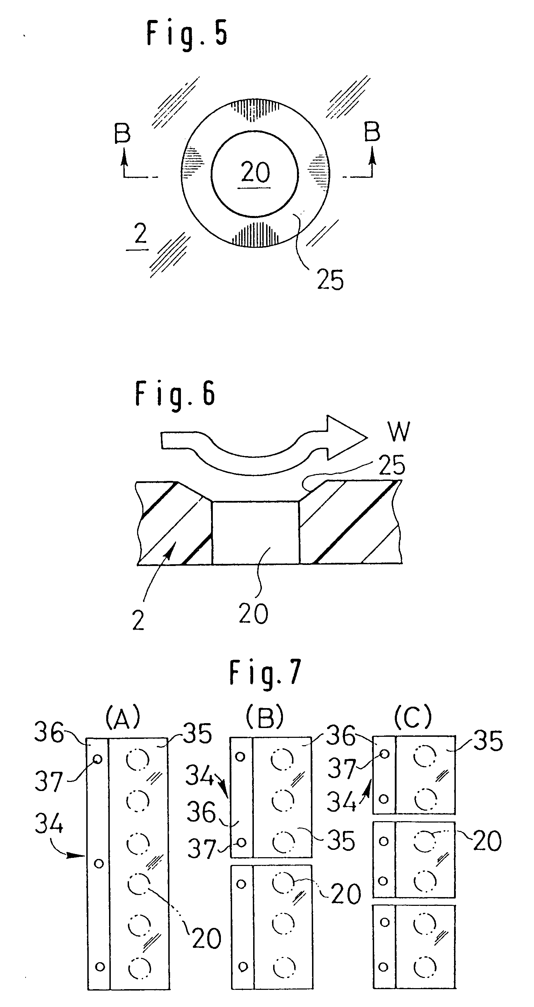

Figure 5 and Figure 6 being a sectional view along B-B of Figure 5 show the shape of an air flow-through hole 20. A conical surface 25 is provided at the entrance of the air flow-through hole 20 so that ram air can be smoothed along the conical surface 25 to prevent disturbance of the air and to reduce the air resistance.

Now the function of the present embodiment will be described.

When the motorcycle is banked to the left side to turn left, the side surface of the fairing 2 receives ram air W (Fig. 6) as side wind and this ram air W can pass the fairing 2 through the multiple air flow-through holes 20 so that the holes 20 can reduce the air resistance by the ram air W. As the air flow-through holes 20 are also made in the smooth surface of the inner duct 18, even if the ram air W strikes its smooth surface 19 at right angle, the running air resistance can be reduced by passing the air flow-through holes 20. This is particularly effective for high speed racing machines.

As the air flow capacity within the fairing 2 is increased by the ram air W passing the air flow-through holes 20, it can improve the cooling efficiency of the radiator 6, the engine 7, the exhaust pipe Ex and parts of the main frame 5. Further, ram air W entered from air conducting openings for the radiator 6 also passes the air flow-through holes 20 in the smooth surface 19 so that it can exhaust efficiently the hot air from the radiator 6.

Figure 7 to Figure 13 show embodiments in which the air flow-through holes 20 can be opened.

Figure 7 to Figure 9 show an embodiment in which the air flow-through holes 20 can be opened and closed in response to air pressure.

Figure 7 shows multiple substantially rectangular plate elements to open and close the air flow-through holes 20. The plate elements have portions 35 which can open and close the air flow-through holes 20 and fitting portions 36 in which the plate elements are fitted to the fairing 2 by screws 37. The length of the plate elements depends upon the degree of curvature and so on of the fairing 2. They are one plate (A), two divided plates (B) and three divided plates (C).

Figure 8 shows a reed valve type plate which is made by a resilient plate element. Figure 9 shows a hinged-type plate in which an opening and closing portion 35 is swingably connected to a fitting portion 36 by a cowl 38 and a shaft 39. The former is set by the opening and closing portion 35 itself and the latter is set by a coil spring to the predetermined preload in order to bias the opening and closing portion 35 to the fairing 2.

According to this construction, when the motorcycle is running straight, the ram air W flows along the outside surface of the fairing 2 if the air flow-through holes 20 are closed as shown in Figures 8 and 9, resulting in that there occurs a smoothing effect by the fairing 2.

When the motorcycle is cornering, the air pressure to the opening and closing portions 35 increases as the side wind of the ram air W. If the air pressure overcomes the preload to bias the opening and closing portions 35, these portions 35 open inwardly as shown by a dotted line and a part of the ram air W passes to the inside of the fairing 2 to control the increase of the air pressure.

According to this embodiment, it is possible to present opened or closed air flow-through holes 20 in response to the air pressure by which both a smoothing effect during a motorcycle straight running operation and an air pressure control effect during a motorcycle cornering operation can be achieved.

Figure 10 to Figure 13 show an embodiment in which an opening and closing of plate elements is controlled by an electrical device. A slide valve 40 is provided at air flow-through holes 20 positioned within a fairing 2, the slide valve 40 being movable by a solenoid 41 (Fig. 13).

As shown in Figure 10, the slide valve 40 has vertical slot-type openings 42 and a fitting portion 43 at one side thereof. The openings 42 can be altered in length as shown in Figure 7 (A) to (C).

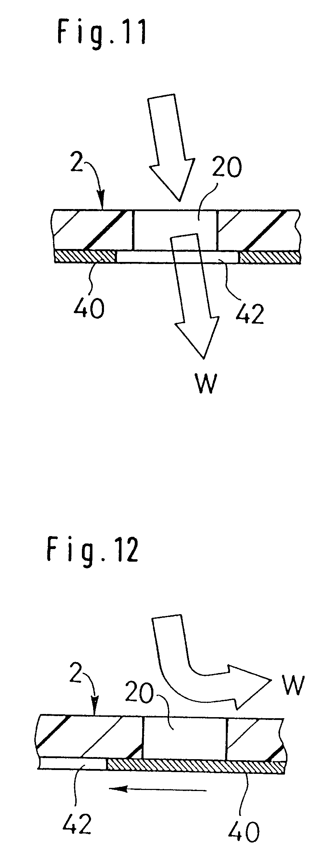

The fitting portion 43 of the slide valve 40 is connected to the tip of an actuator rod which is connected to the solenoid 41 mounted within the fairing 2. When the motorcycle is cornering, the slide valve 40 is moved opening the air flow-through holes 20 through the openings 42 as shown in Figure 11. When the motorcycle is running straight, the openings 42 are not in line with the air flow-through holes 20 as shown in Figure 12.

Figure 13 shows a control system for the slide valve 40. The solenoid 41 is connected to a control unit 45 realized by a micro computer which is connected to a steering angle sensor 46 sensing a handle rotating angle, a throttle opening sensor 47, a brake switch 48 detecting a brake on and off condition, an engine revolution sensor 49, a gear position sensor 50, a motorcycle speed sensor 51 and a side wind sensor 52 mounted on the fairing 2.

The following table shows the conditions for the sensor to switch open the air flow-through holes 20.

**Table**

| Detection | Closing air flow-through holes 20 | Opening air flow-through holes 20 |
|---|---|---|
| Steering Angle | very small | large |
| Throttle | open | closed |
| Brake | not used | used |
| Engine Revolution | high | low |
| Gear Position | high gear | low gear |
| Motorcycle Speed | high | low |
| Side Wind Pressure | less than a predetermined value | above the predetermined value |
| Opening and closing depends on whether the motorcycle is running straight or curving. | | |

In case of employing the electrical system, an electrical motor can be used as actuating device instead of the solenoid 41 in which case it is possible to vary continuously the opening degree of the air flow-through holes 20. In case of controlling the air flow-through holes 20 simply to open or close, the control unit 45 is not required and the solenoid 41 can be directly connected to a sensor or a switch.

Figure 14 to Figure 16 show an embodiment in which a water protection plate 63 is provided in a front surface portion 62 of a connecting portion 27 at a distance from the fairing 2. The front surface portion 62 is curved corresponding to the connecting portion 27 and has both a front portion 64 extending transversely in parallel with an opening for a head lamp and a side portion 65 extending longitudinally in parallel with a side portion of the connecting portion 27.

A bent portion 66 directed to the front portion 62 is formed at a central edge portion of the front portion 64 and there is a narrow gap S between a tip edge of the water protection plate 63 and the opening for the head lamp. The water protection plate 63 is disposed behind all air flow-through holes 20 made in the front portion 62 so that it can protect against water 67 passing the air flow-through holes 20 and an air outlet 17 formed in a detachable cover plate. The cover plate is separated from the upper cowl 12 and is made integral with the air outlet 17 and the inner duct 18 and further is detachably mounted to the upper cowl 12 by a connecting element. Air flow-through holes 20 in the lower cowl 13 are formed in a cover plate which is detachably mounted to the lower cowl 13 by a connecting element. An exhaust pipe Ex adjacent the engine 7 is disposed inside the lower cowl 13 in which there is provided the cover plate.

Figure 15 is an enlarged sectional view of one of the air flow-through holes 20 made in each of the fairings 2 such as in a connecting portion 27, in an air outlet 17, in a lower cowl 13 and so on and is a drawing corresponding to Figure 6. The inner wall of the air flow-through hole 20 is formed as a surface 72 curved outwardly to the outside of the fairing 2 and a recess portion 74 from an inner surface 73 is formed in the inside of the fairing 2.

Figure 16 shows a mold for forming air flow-through holes 20, with an upper mold 75 for forming the outside surface of the fairing 2 and a lower mold 76 for forming the inside surface of the fairing 2. The fairing 2 is formed between the upper mold 75 and the lower mold 76 and the air flow-through holes 20 are formed at the same time. The curved surface 72 of the air flow-through holes 20 is formed by a projection 77 at the upper mold and a recess 74 at a stepped portion 78 in the lower mold 76. The parting line between the upper mold 75 and the lower mold 76 corresponds to the inner surface of the fairing 2 and the tip end of the projection 77 contacts the summit portion of the stepped portion 78.

The function of this embodiment will now be described. In Figure 14, water 67 together with ram air W enters into the meter cover portion 15 through the air flow-through holes 20 formed in the front surface portion 62 and collides with the front portion 64 of the water protection plate 63. The water does not reach the operator and falls downwardly along the water protection plate 63. Further, water 67 from the front portion 64 to the center of the motorcycle is restricted by the bent portion 66 and falls downwardly along the bent portion 66.

As there is provided the gap S between the water protection plate 63 and the meter cover portion 15, ram air W is not restricted to keep the high cooling efficiency within the fairing 2. As the front space and the rear space of the meter cover portion 15 communicate by the air flow-through holes 20 in the connecting portion 27, there occurs no negative pressure in the back of the meter cover portion 15 during a motorcycle high speed running operation.

The cover plate in the lower cowl 13 is located along the high temperature exhaust pipe Ex. Therefore cooling effects can be obtained together with air pressure control by the air flow-through holes 20.

As shown in Figure 15, the ram air W can be passed smoothly by the curved surface 72 in the air flow-through holes 20. As shown in Figure 16, as the parting line between the projection 77 and the stepped portion 78 is identical with the inner surface of the fairing 2, it can simplify the finishing process.

## Claims

1. A fairing (2) for a motorcycle, said fairing (2) continuously covering both sides of an engine (7) mounted on a front portion of a main frame (5) of said motorcycle, an upper forward portion of a front fork (3) of said motorcycle being rotatably mounted in a head pipe connected to said front portion of said main frame (5) and a multiple of air flow through-holes (20) being provided in said fairing (2), **characterized in** that said air flow through-holes (20) are provided in substantially the whole surface area of said fairing (2).

2. A fairing (2) for a motorcycle according to claim 1
characterized in that the total area of said air flow through-holes (20) to the whole surface area of said fairing (2) is more than 17 % (seventeen per cent).

3. A fairing (2) for a motorcycle according to claim 1
characterized in that said air flow through-holes (20) are formed - as is known - by netted fiber elements (22, 23).

4. A fairing (2) for a motorcycle according to claim 1
characterized in that said air flow through-holes (20) are formed - as is known - by slots.

5. A fairing (2) for a motorcycle according to claim 1
characterized in that edges of said air flow through-holes (20) are formed by cut edges.

6. A fairing (2) for a motorcycle according to claim 1
characterized in that an outlet (17) for air exhausted from a radiator (6) is arranged adjacent to a side of said radiator (6) and an inner duct (18) communicating with said outlet (17) is bent inwardly to said main frame (5), said air flow through-holes (20) being also provided in said inner duct (18).

7. A fairing (2) for a motorcycle according to claim 6
characterized in that said radiator (6) is divided into an upper radiator (6a) and a lower radiator (6b) and an outlet (17) is arranged on one side of each radiator (6a, 6b).

8. A fairing (2) for a motorcycle according to claim 1
characterized in that a middle surface of said fairing (2) between a meter cover portion (15) and an upper portion (26) of a cooling air inlet (16) opening to a radiator (6) is formed in a downwardly inclined portion of said fairing (2) having air flow through-holes (20).

9. A fairing (2) for a motorcycle according to claim 1
characterized in that said air flow through-holes (20) are made in an air exhaust duct (30) which is formed in a front lower portion of a side surface of said fairing (2).

10. A fairing (2) for a motorcycle according to claim 1
characterized in that - as is known - opening and closing of said air flow through-holes (20) is controlled.

11. A fairing (2) for a motorcycle according to claim 10
characterized in that said air flow through-holes (20) are controlled by an actuating device (41) in response to wind air pressure.

12. A fairing (2) for a motorcycle according to claim 10
characterized in that said air flow through-holes (20) are controlled by an electrical actuating device (41).

13. A fairing (2) for a motorcycle according to claim 1
characterized in that - as is known - a water protection plate (63) is disposed within the fairing (2) behind air flow through-holes (20) which are directed forwardly.

## Patentansprüche

1. Verkleidung (2) für ein Kraftrad, wobei die Verkleidung (2) beide Seiten eines an einem vorderen Abschnitt eines Hauptrahmens (5) des Kraftrads angebrachten Motors (7) durchgehend abdeckt, wobei ein oberer vorderer Abschnitt einer Vordergabel (3) des Kraftrads drehbar in einem mit dem vorderen Abschnitt des Hauptrahmens (5) verbundenen Kopfrohr angebracht ist, und wobei eine Vielzahl von Luftströmungs-Durchgangslochern (20) in der Verkleidung (2) vorgesehen ist, **dadurch gekennzeichnet**, daß die Luftströmungs-Durchgangslöcher (20) im wesentlichen auf der gesamten Fläche der Verkleidung (2) vorgesehen sind.

2. Verkleidung (2) für ein Kraftrad nach Anspruch 1,
**dadurch gekennzeichnet**, daß die Gesamtfläche der Luftströmungs-Durchgangslöcher (20) zur gesamten Oberfläche der Verkleidung (2) mehr als 17 % (siebzehn Prozent) beträgt.

3. Verkleidung (2) für ein Kraftrad nach Anspruch 1,
**dadurch gekennzeichnet**, daß die Luftströmungs-Durchgangslöcher (20) - wie dies bekannt ist - von vernetzten Faserelementen (22, 23) gebildet sind.

4. Verkleidung (2) für ein Kraftrad nach Anspruch 1,
**dadurch gekennzeichnet**, daß die Luftströmungs-Durchgangslöcher (20) - wie dies bekannt ist - von Schlitzen gebildet sind.

5. Verkleidung (2) für ein Kraftrad nach Anspruch 1,
**dadurch gekennzeichnet**, daß Ränder der Luftströmungs-Durchgangslöcher (20) von angeschnittenen Rändern gebildet sind.

6. Verkleidung (2) für ein Kraftrad nach Anspruch 1,
**dadurch gekennzeichnet**, daß ein Auslaß (17) für von einem Kühler (6) abgeführte Luft einer Seite des Kühlers (6) benachbart angeordnet ist, und ein Innenkanal (18), der mit dem Auslaß (17) in Verbindung steht, nach innen zu dem Hauptrahmen (5) gekrümmt ist, wobei die Luftströmungs-Durchgangslöcher (20) auch in dem Innenkanal (18) vorgesehen sind.

7. Verkleidung (2) für ein Kraftrad nach Anspruch 6,
**dadurch gekennzeichnet**, daß der Kühler (6) in einen oberen Kühler (6a) und einen unteren Kühler (6b) geteilt ist, und ein Auslaß (17) auf einer Seite jedes Kühlers (6a, 6b) angeordnet ist.

8. Verkleidung (2) für ein Kraftrad nach Anspruch 1,
**dadurch gekennzeichnet**, daß eine Mittelfläche der Verkleidung (2) zwischen einem Instrumenten-Abdeckungsabschnitt (15) und einem oberen Abschnitt (26) eines sich zu einem Kühler (6) öffnenden Kühllufteinlasses (16) in einem nach unten geneigten Abschnitt der Verkleidung (2) mit Luftströmungs-Durchgangslöchern (20) ausgebildet ist.

9. Verkleidung (2) für ein Kraftrad nach Anspruch 1,
**dadurch gekennzeichnet**, daß die Luftströmungs-Durchgangslöcher (20) in einem Luftauslaßkanal (30) ausgebildet sind, der in einem vorderen unteren Abschnitt einer Seitenfläche der Verkleidung (2) ausgebildet ist.

10. Verkleidung (2) für ein Kraftrad nach Anspruch 1,
**dadurch gekennzeichnet**, daß das Öffnen und Schließen der Luftströmungs-Durchgangslöcher (20) - wie dies bekannt ist - gesteuert ist.

11. Verkleidung (2) für ein Kraftrad nach Anspruch 10,
**dadurch gekennzeichnet**, daß die Luftströmungs-Durchgangslöcher (20) von einer Stellvorrichtung (41) in Antwort auf einen Windluftdruck gesteuert sind.

12. Verkleidung (2) für ein Kraftrad nach Anspruch 10,
**dadurch gekennzeichnet**, daß die Luftströmungs-Durchgangslöcher (20) durch eine elektrische Stellvorrichtung (41) gesteuert sind.

13. Verkleidung (2) für ein Kraftrad nach Anspruch 1,
**dadurch gekennzeichnet**, daß eine zum Schutz vor Wasser dienende Platte (63) - wie dies bekannt ist - in der Verkleidung (2) hinter nach vorne gerichteten Luftströmungs-Durchgangslöchern (20) angeordnet ist.

## Revendications

1. Carénage (2) pour une motocyclette, lent carénage (2) recouvrant de manière continue les deux côtés d'un moteur (7) monté sur une partie avant d'un châssis principal (5) de ladite motocyclette, une partie supérieure avant d'une fourche avant (3) de ladite motocyclette étant montée en rotation dans un tube frontal relié à ladite partie avant du châssis principal (5) et une multitude d'orifices de passage d'air (20) étant aménagés dans ledit carénage (2), caractérisé en ce que lesdits orifices de passage d'air (20) sont aménagés sensiblement dans la totalité de la surface du dit carénage (2).

2. Carénage (2) pour une motocyclette selon la revendication 1
caractérisé en ce que la surface totale des dits orifices de passage d'air (20) est supérieure à 17% (dix sept pour cent) de la surface totale du dit carénage (2).

3. Carénage (2) pour une motocyclette selon la revendication 1
caractérisé en ce que lesdits orifices de passage d'air (20) sont formés - comme il est connu - par des éléments entrecroisés de fibre (22, 23).

4. Carénage (2) pour une motocyclette selon la revendication 1
caractérisé en ce que lesdits orifices de passage d'air (20) sont formés - comme il est connu - par des fentes.

5. Carénage (2) pour une motocyclette selon la revendication 1
caractérisé en ce que des bords des dits orifices de passage d'air (20) sont formés par des bords en découpe.

6. Carénage (2) pour une motocyclette selon la revendication 1
caractérisé en ce qu'une sortie (17) pour évacuer l'air d'un radiateur (6) est aménagée adjacente d'un co'té du dit radiateur (6) et un conduit intérieur (18) communiquant avec ladite sortie (17) est incurvé vers l'intérieur vers ledit châssis principal (5), lesdits orifices de passage d'air (20) étant également aménagés dans ledit conduit intérieur (18).

7. Carénage (2) pour une motocyclette selon la revendication 6
caractérisé en ce que ledit radiateur est divisé en un radiateur supérieur (6a) et un radiateur inférieur (6b) et une sortie (17) est aménagée sur un côté de chaque radiateur (6a, 6b).

8. Carénage (2) pour une motocyclette selon la revendication 1
caractérisé en ce qu'une surface médiane du dit carénage (2) entre une partie de capot de cadrans (15) et une partie supérieure (26) d'une entrée d'air de refroidissement (16) s'ouvrant sur un radiateur (6) est formée dans une partie inclinée vers le bas du dit carénage (2) comportant des orifices de passage d'air (20).

9. Carénage (2) pour une motocyclette selon la revendication 1
caractérisé en ce que lesdits orifices de passage d'air (20) sont réalisés dans un conduit d'évacuation d'air (30) qui est formé dans une partie avant inférieure d'une surface latérale du dit carénage (2).

10. Carénage (2) pour une motocyclette selon la revendication 1
caractérisé en ce que - comme il est connu - l'ouverture et la fermeture des dits orifices de passage d'air (20) est contrôlée.

11. Carénage (2) pour une motocyclette selon la revendication 10
caractérisé en ce que lesdits orifices de passage d'air (20) sont contrôlés par un dispositif de commande (41) en réponse à la pression d'air.

12. Carénage (2) pour une motocyclette selon la revendication 10
caractérisé en ce que lesdits orifices de passage d'air (20) sont contrôlés par un dispositif de commande électrique (41).

13. Carénage (2) pour une motocyclette selon la revendication 1
caractérisé en ce que - comme il est connu - une plaque de protection contre l'eau (63) est disposée à l'intérieur du dit carénage (2) derrière les orifices de passage d'air qui sont dirigés vers l'avant.
